# EUROPÄISCHE PATENTSCHRIFT

(11) **EP 2 663 847 B1**
(45) Veröffentlichungstag und Bekanntmachung des Hinweises auf die Patenterteilung: **04.04.2018**
(21) Anmeldenummer: 12700309.3
(22) Anmeldetag: 11.01.2012
(51) Int. Cl.: G01L 1/22, G01L 9/00

(54) **VORRICHTUNG ZUM WANDELN EINER KRAFT ODER EINES DRUCKS IN EIN ELEKTRISCHES SIGNAL UND VERFAHREN ZUR HERSTELLUNG EINER SOLCHEN VORRICHTUNG**
DEVICE FOR CONVERTING A FORCE OR A PRESSURE INTO AN ELECTRICAL SIGNAL AND METHOD FOR PRODUCING SUCH A DEVICE
DISPOSITIF DESTINÉ À CONVERTIR UNE FORCE OU UNE PRESSION EN UN SIGNAL ÉLECTRIQUE, ET PROCÉDÉ DE PRODUCTION D'UN TEL DISPOSITIF

(30) Priorität: 12.01.2011 DE 102011008346
(43) Veröffentlichungstag der Anmeldung: 20.11.2013
(73) Patentinhaber: Hydac Electronic GmbH, 66128 Saarbrücken (DE)
(72) Erfinder: BRODE, Wolfgang, Kurt, 07629 Hermsdorf (DE); KEINER, André, 09387 Jahnsdorf (DE)
(74) Vertreter: Crazzolara, Helmut
(86) Internationale Anmeldenummer: PCT/EP2012/000094
(87) Internationale Veröffentlichungsnummer: WO 2012/095304

(56) Entgegenhaltungen:
- EP-A2- 0 942 272
- EP-A2- 2 251 664
- DE-A1- 3 419 418
- DE-A1- 10 131 688
- DE-A1-102007 027 274
- US-A- 3 754 438
- US-B1- 6 655 216

## Beschreibung

Die Erfindung betrifft eine Vorrichtung nach dem Oberbegriff von Patentanspruch 1 sowie ein Verfahren zur Herstellung einer solchen Vorrichtung mit den Merkmalen im Oberbegriff von Anspruch 8.

Derartige Vorrichtungen beruhen in der Regel darauf, dass die Kraft bzw. der Druck eine Verformung eines dafür vorgesehenen Verformungskörpers der Vorrichtung hervorruft und diese Verformung in ein elektrisches Signal umgewandelt wird. Für eine reine Kraftmessung kann beispielsweise ein Biegebalken vorgesehen sein, für eine Druckmessung eine Membran.

Für bestimmte Anwendungen insbesondere in der Prozess- und Lebensmitteltechnik ist ein frontbündiger Sensor vorteilhaft, bei dem sich kein Medium in dem sonst üblichen Verbindungskanal zu dem Verformungskörper der Vorrichtung sammeln kann. Üblicherweise wird bei solchen Sensoren die Verformung eines frontbündigen Verformungskörpers, beispielsweise einer frontbündigen Membran, über ein nicht-kompressibles Übertragungsmedium, beispielsweise Öl, an die eigentliche Druckaufnehmerstruktur mit Dehnungsmessstreifen weitergeleitet. Derartige Sensoren sind herstellungstechnisch im Hinblick auf die erforderliche Ölfüllung aufwendig und weisen weitere Nachteile auf, beispielsweise den unerwünschten Einfluss der Ausdehnung des Übertragungsmediums im Falle einer Temperaturerhöhung auf das Sensorsignal.

EP 0 942 272 A2 offenbart eine Sensoranordnung zur Messung von Druck, Kraft oder Meßgrößen, die sich auf Druck oder Kraft zurückführen lassen, mit
- einem Chip auf Si-Basis mit mindestens einem sensorischen Wandlergebiet und einer ersten Vorder- und einer ersten Rückseite, der auf mindestens der ersten Rückseite eine strukturierte Oberfläche mit mindestens einem Dünnungsgebiet, das umlaufend ein Versteifungsgebiet umschließt, aufweist, wobei die strukturierte Oberfläche auf der ersten Rückseite eine intensivere Tiefenprofilierung als die erste Vorderseite aufweist,
- einem Trägersubstrat mit einer zweiten Vorder- und einer zweiten Rückseite, wobei die zweite Vorderseite glatt und weitgehend fugenlos ist und der Chip und das Trägersubstrat dergestalt zusammengefügt sind, daß die erste und die zweite Rückseite aneinandergrenzen,
dadurch gekennzeichnet, daß die Sensoranordnung geeignet ist, eine Einleitung der Meßgröße auf die zweite Vorderseite zuzulassen, das mindestens eine Dünnungsgebiet der ersten Rückseite eine vorbestimmte Dünnungstiefe aufweist und die erste und zweite Rückseite in allen Teilgebieten der Sensoranordnung außer den Bereichen der Dünnungsgebiete lückenlos aneinandergrenzen oder feste Verbindungsbereiche aufweisen.

Die EP 2 251 664 A2 beschreibt eine Vorrichtung zum Wandeln einer Kraft oder eines Drucks in ein elektrisches Signal, wobei die Vorrichtung einen ersten Verformungskörper, in Form einer ersten Membran, über den die Kraft oder der Druck in die Vorrichtung einleitbar ist, und einen zweiten Verformungskörper, in Form einer zweiten Membran, durch dessen Auslenkung die Kraft oder der Druck in ein elektrisches Signal wandelbar ist, aufweist, wobei der erste Verformungskörper ein erstes Kraftübertragungsmittel und der zweite Verformungskörper ein zweites Kraftübertragungsmittel zur Übertragung der Kraft von dem ersten Verformungskörper auf den zweiten Verformungskörper aufweist, wobei das erste Kraftübertragungsmittel an seinem von dem ersten Verformungskörper entfernten Ende mit dem vom zweiten Verformungskörper entfernten Ende des zweiten Kraftübertragungsmittels fest verbunden ist, und wobei über das erste und zweite Kraftübertragungsmittel sowohl Druck- als auch Zugkräfte von dem ersten Verformungskörper auf den zweiten Verformungskörper übertragbar sind, wobei das erste Kraftübertragungsmittel im Zentrum des ersten Verformungskörpers angeordnet ist und das zweite Kraftübertragungsmittel im Zentrum des zweiten Verformungskörpers angeordnet ist. Eines der Kraftübertragungsmittel ist als separates Bauteil zwischen der zugeordneten Membran und dem anderen Kraftübertragungsmittel vorgesehen.

Die DE 10 2007 027 274 A1 offenbart eine Vorrichtung zum Wandeln einer Kraft oder eines Drucks in ein elektrisches Signal, wobei die Vorrichtung einen ersten Verformungskörper, insbesondere eine erste Membran, über den die Kraft oder der Druck in die Vorrichtung einleitbar ist, und einen zweiten Verformungskörper, insbesondere eine zweite Membran, durch dessen Auslenkung die Kraft oder der Druck in ein elektrisches Signal wandelbar ist, aufweist, wobei der erste Verformungskörper ein erstes Kraftübertragungsmittel und der zweite Verformungskörper ein zweites Kraftübertragungsmittel zur Übertragung der Kraft von dem ersten Verformungskörper auf den zweiten Verformungskörper aufweist, wobei das erste Kraftübertragungsmittel im Zentrum des ersten Verformungskörpers angeordnet ist und das zweite Kraftübertragungsmittel im Zentrum des zweiten Verformungskörpers angeordnet ist, und wobei über das erste und zweite Kraftübertragungsmittel sowohl Druck- als auch Zugkräfte von dem ersten Verformungskörper auf den zweiten Verformungskörper übertragbar sind. Die Kraftübertragungsmittel dieser Vorrichtung sind über eine Goldschicht miteinander verbunden.

Die US 3 754 438 beschreibt eine Lastmessvorrichtung, bei der die Kraftübertragungsmittel durch einen Gewindebolzen miteinander verbunden sind.

Die DE 101 31 688 A1 zeigt einen temperaturkompensierten Drucksensor auf, bei dem die Kraftübertragungsmittel lediglich verbunden sind.

Aus der US 6 655 216 B1 geht ein Drucksensor hervor, bei dem Kraftübertragungsmittel durch ein Isolationsmittel bestehend aus Pyrex®-Glas verbunden sind.

Bei dem Lastwandler der DE 34 19 418 A1 sind zwischen massiven Lastaufnahmemitteln mehrere, dezentral angeordnete, biegsame Teile angeordnet, die randseitig miteinander verschweißt sein können.

Der Erfindung liegt die Aufgabe zugrunde, eine Vorrichtung bereitzustellen, welche die Nachteile des Standes der Technik überwindet, insbesondere einen dauerhaft zuverlässigen Betrieb und eine hohe Messgenauigkeit gewährleistet. Außerdem soll ein Verfahren zur Herstellung einer solchen Vorrichtung bereitgestellt werden, das bei einfacher Verfahrensführung reproduzierbar robuste und dennoch sehr präzise Vorrichtungen hervorbringt.

Diese Aufgabe ist durch die im Anspruch 1 bestimmte Vorrichtung sowie durch das im nebengeordneten Anspruch 8 bestimmte Herstellverfahren gelöst. Besondere Ausführungsarten der Erfindung sind in den Unteransprüchen bestimmt.

Gemäß dem Kennzeichen von Anspruch 1 ist vorgesehen, dass die Enden durch Widerstandsschweißen miteinander verbunden sind.

In einer Ausführungsart ist ein in der Regel keine Sensorelemente aufweisender erster Verformungskörper mit einem mindestens ein Sensorelement aufweisenden zweiten Verformungskörper verbunden. Der erste Verformungskörper ist durch die Einwirkung der zu messenden Kraft oder des zu messenden Drucks verformbar, wobei die Verformung vorzugsweise ausschließlich elastisch ist. Die Verformung des ersten Verformungskörpers wird über Kraftübertragungsmittel auf den zweiten Verformungskörper übertragen. Die Verformung des zweiten Verformungskörpers wird in ein elektrisches Signal umgewandelt, beispielsweise unter Verwendung von Dehnungsmessstreifen. Jeder Verformungskörper bildet jeweils einen Abschnitt des Kraftübertragungsmittels aus; diese Abschnitte werden im Verlauf der Herstellung der Vorrichtung fest miteinander verbunden, entweder unmittelbar oder mittelbar, beispielsweise unter Verwendung eines Zwischenstücks.

So kann beispielsweise ein in der Regel keine Sensorelemente aufweisender, topfförmiger erster Verformungskörper für den Kontakt mit dem Medium, dessen Druck ermittelt werden soll, vorgesehen sein. Der erste Verformungskörper bildet eine Membran, deren Dicke an den Nenndruck der Vorrichtung angepasst ist und eine ausreichend hohe Überlastfestigkeit aufweist. Der erste Verformungskörper kann als Drehteil hergestellt sein. Beim Drehen kann beispielsweise mittig ein Stößel als Kraftübertragungsmittel stehengelassen werden, mittels dem die Durchbiegung des ersten Verformungskörpers infolge einer Druck- oder Kraftbeaufschlagung auf den zweiten Verformungskörper übertragbar ist.

Der zweite Verformungskörper weist eine Membran auf und kann beispielsweise im Wesentlichen ebenfalls topfförmig ausgebildet sein. Der zweite Verformungskörper kann als zweites Kraftübertragungsmittel ebenfalls einen Stößel aufweisen, der einstückig mit der Membran ausgebildet ist. Durch die Verbindung der beiden freien Enden der Stößel miteinander sind sowohl Druckkräfte als auch Zugkräfte von dem ersten Verformungskörper auf den zweiten Verformungskörper übertragbar. Die Verbindung der beiden Kraftübertragungsmittel erfolgt durch Widerstandsschweißen.

Es weisen beide Verformungskörper eine Membran auf und können jeweils topfförmig ausgebildet sein. Das Kraftübertragungsmittel kann mindestens abschnittsweise zylindrisch und einstückig mit der jeweiligen Membran ausgebildet sein. Das freie Ende des Kraftübertragungsmittels kann bündig mit dem Rand der Membran abschließen. In diesem Fall wird der zweite Verformungskörper ohne Kraft- oder Druckbeaufschlagung unausgelenkt sein und kann je nach Beanspruchung des ersten Verformungskörpers (Zug- oder Druckkraft, Unter- oder Überdruck) in beide Richtungen ausgelenkt werden und dabei eine hohe Linearität des Zusammenhangs zwischen Auslenkung und Kraft- oder Druckbeaufschlagung bereitstellen.

Alternativ hierzu kann die Verbindung der beiden Verformungskörper auch derart erfolgen, dass bereits ohne Einwirkung einer Kraft oder eines Drucks insbesondere der zweite Verformungskörper eine Vorspannung aufweist, insbesondere eine Vorspannung entgegen der Auslenkung des zweiten Verformungskörpers, wie sie bei Einwirkung einer Kraft oder eines Drucks auftritt. Dies ist insbesondere dann von Vorteil, wenn im Betrieb der Vorrichtung lediglich Zug- oder Druckkräfte zu übertragen sind. In diesem Fall kann durch eine geeignete Vorspannung der gesamte hochlineare Bereich des Zusammenhangs zwischen Kraft oder Druck und Auslenkung des Verformungskörpers ausgenutzt werden, nämlich von -100 % bis +100 % der Nennauslenkung, und nicht nur von 0 bis 100 %. Diese Vorspannung kann beispielsweise durch Verwendung eines Einlegeteils zwischen den beiden freien Enden der beiden Kraftübertragungsmittel bereitgestellt werden, durch Verwendung eines Einlegeteils zwischen den miteinander zu verbindenden Randbereichen der beiden Verformungskörper oder durch eine angepasste Länge mindestens eines Kraftübertragungsmittels.

Die Kraftübertragungsmittel sind im Zentrum der Verformungskörper angeordnet, was insbesondere die Herstellung der Verformungskörper als Drehteil vereinfacht. Die Kraftübertragungsmittel sind einstückig mit den Membranen ausgebildet.

In einer Ausführungsart weist der erste Verformungskörper eine höhere Biegesteifigkeit auf als der zweite Verformungskörper. Beispielsweise kann die Membran des ersten Verformungskörpers eine größere Dicke und/oder kleinere laterale Abmessungen aufweisen als die Membran des zweiten Verformungskörpers. Der erste Verformungskörper mit seiner hohen Biegesteifigkeit stellt dabei die Überlastfestigkeit der Vorrichtung bereit.

Der zweite Verformungskörper ist hinsichtlich seiner Biegesteifigkeit an den gewünschten Messbereich der Vorrichtung angepasst. Vorteilhaft ist dabei auch, dass für unterschiedliche Messbereiche ein und derselbe erste Verformungskörper verwendet werden kann und dieser lediglich mit unterschiedlichen zweiten Verformungskörpern verbunden wird, um Vorrichtungen bereitzustellen, die für unterschiedliche Nennbereiche einsetzbar sind. In entsprechender Weise kann auch derselbe zweite Verformungskörper mit unterschiedlichen ersten Verformungskörpern kombiniert werden.

In einer Ausführungsform ist der mit dem Medium, dessen Druck gemessen werden soll, in Kontakt kommende erste Verformungskörper aus einem geeigneten Werkstoff hergestellt, beispielsweise aus einem Edelstahl oder aus Titan. Demgegenüber kann der zweite Verformungskörper aus einem für Sensorelemente üblichen Werkstoff hergestellt sein, beispielsweise aus Stahl der Spezifikation 1.45.42, der im Hinblick auf die Anbringung von Sensorelementen gut zu bearbeiten ist.

In einer Ausführungsart sind auf einer von dem ersten Verformungskörper wegweisenden Oberfläche des zweiten Verformungskörpers Sensorelemente angeordnet, beispielsweise piezoresistive Schichtwiderstände aufgebracht. Die Sensorelemente können als Dehnungsmessstreifen (DMS) ausgebildet sein. Die Sensorelemente können in Dickschichttechnik oder Dünnschichttechnik hergestellt sein. Die Sensorelemente können auch durch eine aufgebrachte, insbesondere aufgeklebte DMS-Folie bereitgestellt werden.

Der zweite Verformungskörper ist als Membran ausgebildet. Die Membran kann vorzugsweise mittig und einstückig ausgebildet einen in Richtung auf den ersten Verformungskörper vorstehenden Stößel aufweisen, der das zweite Kraftübertragungsmittel bildet.

In einer Ausführungsart weist die Vorrichtung auf der Außenseite des ersten und/oder zweiten Verformungskörpers einen vorzugsweise ringförmigen Absatz auf, mittels dem die Vorrichtung in einer vorgebbaren Position in einem Gehäuse fixierbar ist. Der Absatz kann beispielsweise als Ringschulter ausgebildet sein. Ein an dem ersten Verformungskörper angeordneter Absatz kann der frontbündigen und planen Anordnung der Vorrichtung in einem Gehäuse dienen. Ein an dem zweiten Verformungskörper angeordneter Absatz kann der Anlage eines Befestigungsmittels dienen, mittels dem die Vorrichtung in einem Gehäuse einspannbar ist.

Die Erfindung betrifft auch ein Verfahren zur Herstellung einer Vorrichtung wie vorstehend beschrieben mit den Verfahrensschritten von Anspruch 8.

In einer Ausführungsart werden zunächst die beiden Kraftübertragungsmittel fest miteinander verbunden und erst anschließend die beiden Verformungskörper vorzugsweise an ihrem Rand fest miteinander verbunden. Sofern sowohl die Kraftübertragungsmittel als auch der Rand miteinander verschweißt werden, können die beiden Kraftübertragungsmittel durch Widerstandsschweißen miteinander verbunden werden, während die Ränder der beiden Verformungskörper elektrisch isoliert voneinander sind, beispielsweise indem vor dem Verbinden der beiden Kraftübertragungsmittel auf den Rand mindestens eines der beiden Verformungskörper eine elektrisch isolierende Schicht aufgebracht wird, wobei die beiden Kraftübertragungsmittel durch Widerstandsschweißen miteinander verbunden werden. Alternativ hierzu können auch dünne Isolationskörper eingesetzt werden, wie beispielsweise ringförmige Glimmerscheiben.

Nachdem die beiden Kraftübertragungsmittel miteinander verbunden sind, werden die Ränder der beiden Verformungskörper vorzugsweise unter Vakuum oder Schutzgasatmosphäre miteinander verschweißt, beispielsweise durch Elektronenstrahlschweißen oder Laserschweißen. Eine im Randbereich aufgebrachte Isolierschicht kann zuvor beispielsweise nasschemisch entfernt werden. Das Verschweißen der Ränder erfolgt vorzugsweise auf der Außenseite der Verformungskörper. Wenn beide Verformungskörper als topfförmige Membran ausgebildet sind, kann durch eine umlaufende Schweißnaht eine vakuumdichte Verbindung hergestellt werden. Soweit dies nicht erforderlich ist, kann die Verbindung auch punktförmig oder linienförmig sein. Die Tiefe der Schweißnaht beträgt dabei vorzugsweise weniger als 80 %, insbesondere weniger als 50 % der Breite des Randes, um den Einfluss der durch das Schweißen hervorgerufenen mechanischen Spannungen zu reduzieren.

In einer Ausführungsart weist mindestens einer der beiden Verformungskörper in dem Bereich der Schweißnaht eine flanschartige Verbreiterung aus und die Tiefe der Schweißnaht beträgt weniger als 200 % der radialen Erstreckung des Flansches, vorzugsweise weniger als 150 %, insbesondere weniger als 120 %, so dass sich die durch das Schweißen hervorgerufenen mechanischen Spannungen im Wesentlichen lediglich im Bereich des Flansches erstrecken und nicht zu einer Verfälschung des Messsignals führen.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt einen Querschnitt durch ein erstes Ausführungsbeispiel einer erfindungsgemäßen Vorrichtung;
- Fig. 2: zeigt einen Querschnitt durch die Vorrichtung der Fig. 1 in einem in ein Gehäuse eingebauten Zustand;
- Fig. 3 und 4: zeigen zwei unterschiedliche Stadien bei der Herstellung einer erfindungsgemäßen Vorrichtung; und
- Fig. 5: zeigt einen Querschnitt durch ein zweites Ausführungsbeispiel einer erfindungsgemäßen Vorrichtung.

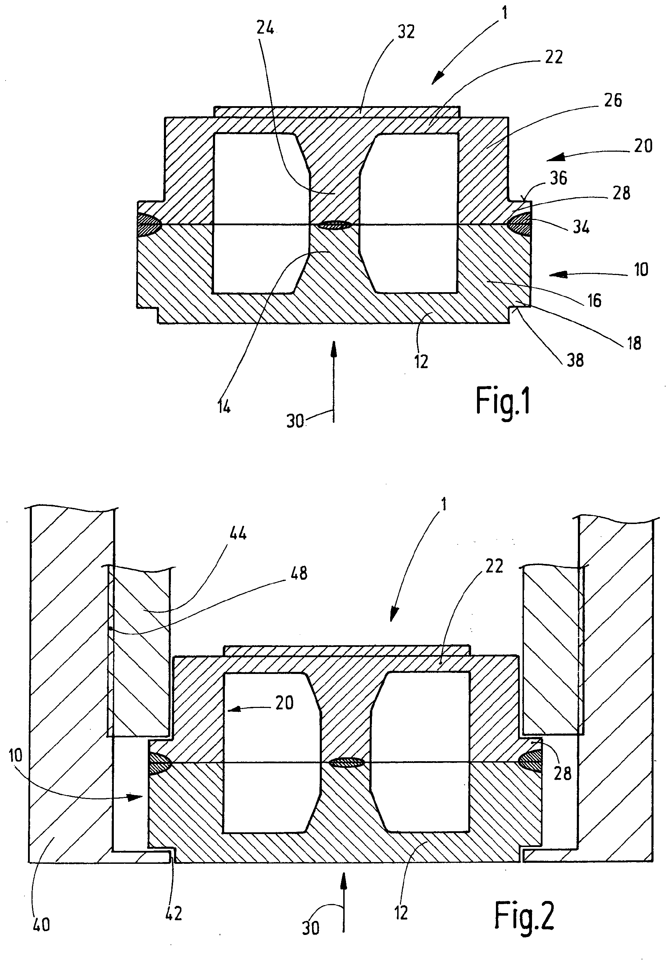

Die Fig. 1 zeigt einen Querschnitt durch ein erstes Ausführungsbeispiel einer erfindungsgemäßen Vorrichtung 1, die einen ersten Verformungskörper 10 aufweist, der einstückig eine erste Membran 12 ausbildet. Der erste Verformungskörper 10 ist im Wesentlichen topfförmig ausgebildet und bildet einstückig mit der Membran 12 ein erstes Kraftübertragungsmittel 14 und einen umlaufenden Rand 16 auf. Das erste Kraftübertragungsmittel 14 ist zentrisch im Bereich der vorzugsweise kreisrunden ersten Membran 12 angeordnet und mindestens abschnittsweise zylindrisch. Das erste Kraftübertragungsmittel 14 weitet sich am Übergang zur ersten Membran 12 kegelförmig auf und der Übergang zur ersten Membran 12 kann zusätzlich noch verrundet sein.

Die Vorrichtung 1 weist einen zweiten Verformungskörper 20 auf, der einstückig eine zweite Membran 22, ein zweites Kraftübertragungsmittel 24 und einen Rand 26 ausbildet. Die Dicke der zweiten Membran 22 ist geringer als die Dicke der ersten Membran 12. Das zweite Kraftübertragungsmittel 24 weitet sich am Übergang zur zweiten Membran 22 kegelförmig auf. Der Übergang zur zweiten Membran 22 ist verrundet.

Die Einleitung der zu messenden Kraft bzw. des zu messenden Drucks 30 erfolgt über die dem zweiten Verformungskörper 20 abgewandte Oberfläche der ersten Membran 12. Die beiden Kraftübertragungsmittel 14, 24 sind an den einander zugewandten freien Enden miteinander fest verbunden, insbesondere verschweißt. Dadurch wird eine Verformung der ersten Membran 12 über die beiden Kraftübertragungsmittel 14, 24 auf die zweite Membran 22 übertragen, und zwar sowohl im Falle von Druckkräften als auch im Falle von Zugkräften.

Auf der von dem ersten Verformungskörper 10 abgewandten Oberfläche ist auf die zweite Membran 22 mindestens ein Sensorelement 32 aufgebracht, mittels dem eine Verformung der zweiten Membran 22 in ein elektrisches Signal umgewandelt werden kann. Beispielsweise ist das Sensorelement 32 ein dehnungsempfindlicher Widerstand. Es können zwei Sensorelemente 32 zu einer Halbbrücke verschaltet sein oder vier Sensorelemente 32 zu einer Vollbrücke verschaltet sein. Es können auch andere Wandlerprinzipien eingesetzt werden, beispielsweise piezoelektrische Sensoren oder eine optische Ermittlung der Durchbiegung der zweiten Membran 22.

Die beiden Verformungskörper 10, 20 liegen mit ihrem Rand 16, 26 in Anlage aneinander und sind auf der Außenseite miteinander verbunden, insbesondere miteinander verschweißt. An seinem dem ersten Verformungskörper 10 zugewandten Randabschnitt weist der zweite Verformungskörper 20 einen Außenflansch 28 auf. Die Verbindungsnaht 34, bei der es sich beispielsweise um eine Schweißnaht handeln kann, hat eine radiale Erstreckung, die im Wesentlichen der radialen Ausdehnung des Flansches 28 entspricht. Dadurch ist verhindert, dass durch die Verbindungsnaht 34 induzierte mechanische Spannungen zu einer das Messergebnis beeinträchtigenden Verformung der zweiten Membran 22 führen; stattdessen werden die mechanischen Spannungen im Bereich des Außenflansches 28 abgebaut. Durch den Außenflansch 28 ist außerdem ein ringförmiger Absatz 36 gebildet, mittels dem die Vorrichtung 1 in einer vorgebbaren Position eines Gehäuses fixierbar ist (Fig. 2).

Der erste Verformungskörper 10 weist im Bereich des Randes 16 einen vorzugsweise ringförmigen Außenflansch 18 auf, mittels dem die Vorrichtung 1 in einem Gehäuse in einer vorgebbaren Position fixiert werden kann. Beispielsweise kann die Vorrichtung 1 in einen entsprechend dimensionierten Ausschnitt in einem Gehäuse eingesetzt werden, so dass die Oberfläche der ersten Membran 12 bündig mit der Frontseite des Gehäuses abschließt (Fig. 2). Alternativ oder ergänzend kann der Außenflansch 18 bzw. der dadurch gebildete Absatz 38 auch der Aufnahme eines Dichtmittels dienen.

Die Fig. 2 zeigt einen Querschnitt durch die Vorrichtung 1 der Fig. 1 in einem in ein Gehäuse 40 eingebauten Zustand. Das Gehäuse 40 weist auf seiner Frontseite eine Aussparung 42 auf, deren lichte Weite kleiner ist als der Außendurchmesser des ersten Verformungskörpers 10, aber größer als der im Frontbereich im Hinblick auf den Außenflansch 18 verbleibende Außendurchmesser der ersten Membran 12, so dass die Vorrichtung 1 in die Aussparung 42 eingesteckt werden kann und bündig mit der Frontseite des Gehäuses 40 abschließen kann. Auf der Innenseite ist ein Befestigungsmittel 44, beispielsweise eine Schraubenmutter mit Außengewinde 48 oder ein hohler Schraubbolzen, in das Gehäuse 40 eingedreht und dabei an seinem stirnseitigen Ende in Anlage an dem durch den Außenflansch 28 gebildeten Absatz 36 des zweiten Verformungskörper 20. Dadurch kann die Vorrichtung 1 lösbar in der dargestellten vorgebbaren Position innerhalb des Gehäuses 40 fixiert werden. Ein gegebenenfalls erforderliches Dichtmittel kann beispielsweise zwischen den Absatz 38 des ersten Verformungskörpers 10 und dem Gehäuse 40 eingesetzt werden und/oder zwischen dem Befestigungsmittel 44 und dem Absatz 36 des zweiten Verformungskörpers 20 eingesetzt werden.

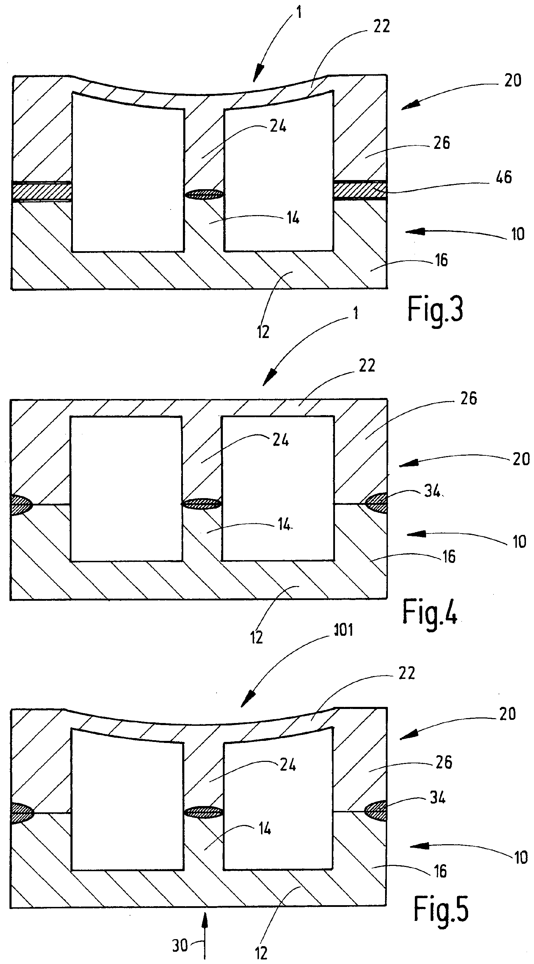

Die Figuren 3 und 4 zeigen zwei unterschiedliche Stadien bei der Herstellung einer erfindungsgemäßen Vorrichtung 1. Nachdem die beiden Verformungskörper 10, 20 beispielsweise als Drehteil separat voneinander hergestellt wurden, wird auf den Rand 16 des ersten Verformungskörper 10 und/oder den Rand 26 des zweiten Verformungskörpers 20 eine Abstandsschicht 46 aufgebracht. Anschließend werden die beiden Kraftübertragungsmittel 14, 24 in Anlage aneinander gebracht, beispielsweise wird durch einen Stempel die zweite Membran 22 ausgelenkt, bis das zweite Kraftübertragungsmittel 24 in Anlage an dem ersten Kraftübertragungsmittel 14 ist. Aufgrund der unterschiedlichen Biegesteifigkeiten der beiden Membranen 12, 22 lenkt sich dabei im Wesentlichen nur die zweite Membran 22 aus. In dem in der Fig. 3 dargestellten Zustand werden die beiden Kraftübertragungsmittel 14, 24 miteinander verbunden. Sofern die Verbindung durch Widerstandsschweißen erfolgt, ist die Abstandsschicht 46 elektrisch isolierend.

Nach dem Herstellen der Verbindung zwischen den Kraftübertragungsmitteln 14, 24 wird die Abstandsschicht 46 entfernt. Daraufhin ergibt sich der in der Fig. 4 dargestellte Zustand. Davon ausgehend können nun die Ränder 16, 26 der beiden Verformungskörper 10, 20 miteinander verbunden werden. Beispielsweise kann durch Elektronenstrahlschweißen eine umlaufende Verbindungsnaht 34 erzeugt werden.

Die Abstandsschicht 46 kann beispielsweise durch maskiertes Aufbringen einer Lackschicht oder einer Oxydschicht auf die Ränder 16, 26 erfolgen. Das Entfernen der Abstandsschicht 46 kann nasschemisch erfolgen, beispielsweise durch Lösen einer Lackschicht mit Lösungsmittel oder durch Entfernen einer Oxydschicht mit Säure oder Lauge.

Die Fig. 5 zeigt einen Querschnitt durch ein zweites Ausführungsbeispiel einer Vorrichtung 101, bei dem auch ohne Beaufschlagung einer Kraft oder eines Drucks 30 eine Vorspannung bzw. Vorverformung der zweiten Membran 23 gegeben ist. Dies kann beispielsweise durch eine nicht bündige Länge mindestens eines der Kraftübertragungsmittel 14, 24 gegenüber dem Randbereich 16, 26 des jeweiligen Verformungskörpers 10, 20 bereitgestellt werden. Alternativ oder ergänzend können auch Einlegeteile eingesetzt werden, beispielsweise zwischen den Kraftübertragungsmitteln 14, 24 und/oder zwischen den Rändern 16, 26 der Verformungskörper 10, 20.

Erfolgt nun eine Beaufschlagung mit einer Kraft in Richtung des Pfeils 30 in der Fig. 5, so wird die Membran 22 aus der dargestellten konkav ausgelenkten Lage zunächst in ihre unverspannte plane Lage ausgelenkt und bei weiter ansteigender Kraft oder Druck 30 in konvexer Form ausgewölbt. Dadurch kann der Bereich der maximalen Linearität zwischen wirkender Kraft 30 und Auslenkung der Membran 22 ausgenutzt werden, wodurch sich die Messgenauigkeit der Vorrichtung 101 erhöht.

## Patentansprüche

1. Vorrichtung (1) zum Wandeln einer Kraft oder eines Drucks in ein elektrisches Signal, wobei die Vorrichtung (1) einen ersten Verformungskörper (10), in Form einer ersten Membran (12), über den die Kraft oder der Druck in die Vorrichtung (1) einleitbar ist, und einen zweiten Verformungskörper (20), in Form einer zweiten Membran (22), durch dessen Auslenkung die Kraft oder der Druck in ein elektrisches Signal wandelbar ist, aufweist, wobei der erste Verformungskörper (10) ein erstes Kraftübertragungsmittel (14) und der zweite Verformungskörper (20) ein zweites Kraftübertragungsmittel (24) zur Übertragung der Kraft von dem ersten Verformungskörper (10) auf den zweiten Verformungskörper (20) aufweist, wobei das erste Kraftübertragungsmittel (14) an seinem von dem ersten Verformungskörper (10) entfernten Ende mit dem vom zweiten Verformungskörper (20) entfernten Ende des zweiten Kraftübertragungsmittels (24) fest verbunden ist, und wobei über das erste und zweite Kraftübertragungsmittel (14, 24) sowohl Druck- als auch Zugkräfte von dem ersten Verformungskörper (10) auf den zweiten Verformungskörper (20) übertragbar sind, wobei das erste Kraftübertragungsmittel (14) im Zentrum des ersten Verformungskörpers (10) angeordnet ist und das zweite Kraftübertragungsmittel (24) im Zentrum des zweiten Verformungskörpers (20) angeordnet ist, und wobei das jeweilige Kraftübertragungsmittel (14, 24) einstückig mit der jeweiligen Membran (12, 22) ausgebildet ist, **dadurch gekennzeichnet, dass** die Enden durch Widerstandsschweißen miteinander verbunden sind.

2. Vorrichtung (1) nach Anspruch 1, **dadurch gekennzeichnet, dass** ohne Einwirkung einer Kraft oder eines Drucks auf den ersten Verformungskörper (10) der zweite Verformungskörper (20) eine Vorspannung aufweist, insbesondere eine Vorspannung entgegen der Auslenkung des zweiten Verformungskörpers (20), die infolge der Einwirkung einer Kraft oder Drucks auf den ersten Verformungskörper (10) auftritt.

3. Vorrichtung (1) nach einem der vorangehenden Ansprüche, **dadurch gekennzeichnet, dass** das erste Kraftübertragungsmittel (14) an seinem von dem ersten Verformungskörper (10) entfernten Ende bündig mit dem Rand (16) des ersten Verformungskörpers (10) ist und/oder das zweite Kraftübertragungsmittel (24) an seinem von dem zweiten Verformungskörper (20) entfernten Ende bündig mit dem Rand (26) des zweiten Verformungskörpers (20) ist.

4. Vorrichtung (1) nach einem der vorangehenden Ansprüche, **dadurch gekennzeichnet, dass** der Rand (16) des ersten Verformungskörpers (10) mit dem Rand (26) des zweiten Verformungskörpers (20) fest verbunden ist, insbesondere verschweißt ist, vorzugsweise auf der von den Kraftübertragungsmitteln (14, 24) wegweisenden Außenseite der Ränder (16, 26) der Verformungskörper (10, 20).

5. Vorrichtung (1) nach einem der vorangehenden Ansprüche, **dadurch gekennzeichnet, dass** der erste Verformungskörper (10) eine höhere Biegesteifigkeit aufweist als der zweite Verformungskörper (20), insbesondere dass der erste Verformungskörper (10) dicker ist als der zweite Verformungskörper (20).

6. Vorrichtung (1) nach Anspruch 1 oder einem der vorangehenden Ansprüche, **dadurch gekennzeichnet, dass** auf einer von dem ersten Verformungskörper (10) wegweisenden Oberfläche des zweiten Verformungskörpers (20) mindestens ein Sensorelement (32) angeordnet ist, insbesondere mindestens ein piezoresistiver Schichtwiderstand aufgebracht ist.

7. Vorrichtung (1) nach einem der vorangehenden Ansprüche, **dadurch gekennzeichnet, dass** die Vorrichtung (1) auf der Außenseite einen vorzugsweise ringförmigen Absatz (36, 38) aufweist, mittels dem die Vorrichtung (1) vorzugsweise lösbar in einer vorgebbaren Position in einem Gehäuse (40) fixierbar ist.

8. Verfahren zur Herstellung einer Vorrichtung (1) zum Wandeln einer Kraft oder eines Drucks in ein elektrisches Signal, wobei die Vorrichtung (1) einen ersten Verformungskörper (10), insbesondere eine erste Membran (12), über den die Kraft in die Vorrichtung (1) einleitbar ist, und einen zweiten Verformungskörper (20), insbesondere eine zweite Membran (22), aufweist, durch dessen Auslenkung die Kraft oder der Druck in ein elektrisches Signal wandelbar ist, und wobei der erste Verformungskörper (10) ein erstes Kraftübertragungsmittel (14) und der zweite Verformungskörper (20) ein zweites Kraftübertragungsmittel (24) zur Übertragung der Kraft von dem ersten Verformungskörper (10) auf den zweiten Verformungskörper (20) aufweist, wobei das erste Kraftübertragungsmittel (14) an seinem von dem ersten Verformungskörper (10) entfernten Ende mit dem von dem zweiten Verformungskörper (20) entfernten Ende des zweiten Kraftübertragungsmittels (24) fest verbunden wird und wobei über das erste und zweite Kraftübertragungsmittel (14, 24) sowohl Druck- als auch Zugkräfte von dem ersten Verformungskörper (10) auf den zweiten Verformungskörper (20) übertragbar sind, wobei das erste Kraftübertragungsmittel (14) im Zentrum des ersten Verformungskörpers (10) angeordnet wird und das zweite Kraftübertragungsmittel (24) im Zentrum des zweiten Verformungskörpers (20) angeordnet wird und wobei das jeweilige Kraftübertragungsmittel (14, 24) einstückig mit der jeweiligen Membran (12, 22) ausgebildet wird, **dadurch gekennzeichnet, dass** die beiden Kraftübertragungsmittel (14, 24) an den Enden durch Widerstandsschweißen miteinander verbunden werden.

9. Verfahren nach Anspruch 8, **dadurch gekennzeichnet, dass** beim Verbinden der beiden Kraftübertragungsmittel (14, 24) die Ränder (16, 26) der beiden Verformungskörper (10, 20) elektrisch voneinander isoliert sind, insbesondere vor dem Verbinden eine elektrisch isolierende Schicht auf die einander zugewandten Flächen der Ränder (16, 26) der beiden Verformungskörper (10, 20) aufgebracht wird.

10. Verfahren nach einem der Ansprüche 8 oder 9, **dadurch gekennzeichnet, dass** anschließend an das Verbinden der beiden Kraftübertragungsmittel (14, 24) der Rand (16) des ersten Verformungskörpers (10) und der Rand (26) des zweiten Verformungskörpers (20) fest miteinander verbunden werden, insbesondere verschweißt werden.

## Claims

1. A device (1) for converting a force or a pressure into an electrical signal, the device (1) having a first deformation body (10), in the form of a first membrane (12), by means of which the force or the pressure can be introduced into the device (1), and a second deformation body (20), in the form of a second membrane (22), by means of the deflection of which the force or the pressure can be converted into an electrical signal, the first deformation body (10) having a first force transmitting means (14) and the second deformation body (20) having a second force transmitting means (24) for transmitting the force from the first deformation body (10) to the second deformation body (20), the first force transmitting means (14) being securely connected at its end distant from the first deformation body (10) to the end of the second force transmitting means (24) distant from the second deformation body (20), compressive as well as tensile forces being able to be transmitted from the first deformation body (10) to the second deformation body (20) by means of the first and second force transmitting means (14, 24), the first force transmitting means (14) being disposed in the centre of the first deformation body (10), and the second force transmitting means (24) being disposed in the centre of the second deformation body (20), and the respective force transmitting means (14, 24) being formed in one piece with the respective membrane (12, 22), **characterised in that** the ends are connected to one another by resistance welding.

2. The device (1) according to Claim 1, **characterised in that**, without the application of a force or a pressure on the first deformation body (10), the second deformation body (20) has a preload, in particular a preload against the deflection of the second deformation body (20) which occurs as a consequence of the application of a force or pressure upon the first deformation body (10).

3. The device (1) according to any of the preceding claims, **characterised in that** the first force transmitting means (14) is flush at its end that is distant from the first deformation body (10) with the edge (16) of the first deformation body (10), and/or the second force transmitting means (24) is flush at its end distant from the second deformation body (20) with the edge (26) of the second deformation body (20).

4. The device (1) according to any of the preceding claims, **characterised in that** the edge (16) of the first deformation body (10) is securely connected, in particular welded, to the edge (26) of the second deformation body (20), preferably on the outer side of the edges (16, 26) of the deformation bodies (10, 20) that are pointing away from the force transmitting means (14, 24).

5. The device (1) according to any of the preceding claims, **characterised in that** the first deformation body (10) has a higher deflection resistance than the second deformation body (20), in particular that the first deformation body (10) is thicker than the second deformation body (20).

6. The device (1) according to Claim 1 or any of the preceding claims, **characterised in that** there is disposed on a surface of the second deformation body (20) pointing away from the first deformation body (10) at least one sensor element (32), in particular at least one piezoresistive film resistor.

7. The device (1) according to any of the preceding claims, **characterised in that** the device (1) has on the outer side a preferably annular step (36, 38) by means of which the device (1) can be fixed, preferably detachably, in a pre-definable position within a housing (40).

8. A method for producing a device (1) for converting a force or a pressure into an electrical signal, the device (1) having a first deformation body (10), in particular a first membrane (12), by means of which the force can be introduced into the device (1), and a second deformation body (20), in particular a second membrane (22), by the deflection of which the force or the pressure can be converted into an electrical signal, and the first deformation body (10) having a first force transmitting means (14) and the second deformation body (20) having a second force transmitting means (24) for transmitting the force from the first deformation body (10) to the second deformation body (20), the first force transmitting means (14) being securely connected at its end that is distant from the first deformation body (10) to the end of the second force transmitting means (20) that is distant from the second deformation body (20), and compressive as well as tensile forces being able to be transmitted by means of the first and second force transmitting means (14, 24) from the first deformation body (10) to the second deformation body (20), the first force transmitting means (14) being disposed in the centre of the first deformation body (10), and the second force transmitting means (24) being disposed in the centre of the second deformation body (20), and the respective force transmitting means (14, 24) being formed in one piece with the respective membrane (12, 22), **characterised in that** the two force transmitting means (14, 24) are connected to one another at the ends by resistance welding.

9. The method according to Claim 8, **characterised in that** when connecting the two force transmitting means (14, 24), the edges (16, 26) of the two deformation bodies (10, 20) are electrically insulated from one another, and in particular, prior to the connection, an electrically insulating layer is applied to the surfaces of the edges (16, 26) of the two deformation bodies (10, 20) that are facing one another.

10. The method according to either of Claims 8 or 9, **characterised in that** subsequent to connecting the two force transmitting means (14, 24), the edge (16) of the first deformation body (10) and the edge (26) of the second deformation body (20) are securely connected, in particular welded, to one another.

## Revendications

1. Dispositif (1) de transformation d'une force ou d'une pression en un signal électrique, le dispositif (1) ayant un premier élément (10) de déformation sous la forme d'une première membrane (12), par laquelle la force ou la pression peut être appliquée au dispositif (1), et un deuxième élément (20) de déformation sous la forme d'une deuxième membrane (22), par l'excursion duquel la force ou la pression peut être transformée en un signal électrique, le premier élément (10) de déformation ayant un premier moyen (14) de transmission de force et le deuxième élément (20) de déformation, un deuxième moyen (24) de transmission de force, pour transmettre la force du premier élément (10) de déformation au deuxième élément (20) de déformation, le premier moyen (14) de transmission de force étant, à son extrémité éloignée du premier élément (10) de déformation, relié fixement à l'extrémité, éloignée du deuxième élément (20) de déformation, du deuxième moyen de transmission de force, et dans lequel tant des forces de pression, qu'également de compression, peuvent par le premier et le deuxième moyens (14, 24) de transmission de force être transmises du premier élément (10) de déformation au deuxième élément (20) de déformation, le premier moyen (14) de transmission de force étant disposé au centre du premier élément (10) de déformation, et le deuxième moyen (24) de transmission de force étant disposé au centre du deuxième élément (20) de déformation, et le moyen (14, 24) respectif de transmission de force étant constitué d'une pièce avec la membrane (12, 22) respective, **caractérisé en ce que** les extrémités sont reliées entre elles par soudure par résistance.

2. Dispositif (1) suivant la revendication 1, **caractérisé en ce que**, sans l'application d'une force ou d'une pression au premier élément (10) de déformation, le deuxième élément (20) de déformation a une précontrainte, notamment une précontrainte à l'encontre de l'excursion du deuxième élément (20) de déformation, qui se produit en raison de l'application d'une force ou d'une pression au premier élément (10) de déformation.

3. Dispositif (1) suivant l'une des revendications précédentes, **caractérisé en ce que** le premier moyen (14) de transmission de force est, à son extrémité éloignée du premier élément (10) de déformation, au ras du bord (16) du premier élément (10) de déformation et/ou le deuxième moyen (24) de transmission de force est, à son extrémité éloignée du deuxième élément (20) de déformation, au ras du bord (26) du deuxième élément (20) de déformation.

4. Dispositif (1) suivant l'une des revendications précédentes, **caractérisé en ce que** le bord (16) du premier (10) de déformation est relié fixement au bord (26) du deuxième élément (20) de déformation, en étant notamment soudé, de préférence du côté extérieur, éloigné des moyens (14, 24) de transmission de force, des bords (16, 26) des éléments (10, 20) de déformation.

5. Dispositif (1) suivant l'une des revendications précédentes, **caractérisé en ce que** le premier élément (10) de déformation a une rigidité à la flexion plus grande que le deuxième élément (20) de déformation, le premier élément (10) de déformation, étant notamment plus épais que le deuxième élément (20) de déformation.

6. Dispositif (1) suivant la revendication 1 ou l'une des revendications précédentes, **caractérisé en ce qu'**au moins un élément (32) de capteur, notamment au moins une résistance à couche piézoélectrique, est déposé sur une surface, éloignée de l'élément (10) de déformation, du deuxième élément (20) de déformation.

7. Dispositif (1) suivant l'une des revendications précédentes, **caractérisé en ce que** le dispositif (1) a du côté extérieur, un ressaut (36, 38), au moyen duquel le dispositif peut être immobilisé, de préférence de manière détachable, dans un boîtier (40), en une position pouvant être donnée à l'avance.

8. Procédé de fabrication d'un dispositif (1) de transformation d'une force ou d'une pression en un signal électrique, le dispositif (1) ayant un premier élément (10) de déformation sous la forme d'une première membrane (12), par laquelle la force ou la pression peut être appliquée au dispositif (1), et un deuxième élément (20) de déformation sous la forme d'une deuxième membrane (22), par l'excursion duquel la force ou la pression peut être transformée en un signal électrique, le premier élément (10) de déformation ayant un premier moyen (14) de transmission de force et le deuxième élément (20) de déformation, un deuxième moyen (24) de transmission de force, pour transmettre la force du premier élément (10) de déformation au deuxième élément (20) de déformation, le premier moyen (14) de transmission de force étant, à son extrémité éloignée du premier élément (10) de déformation, relié fixement à l'extrémité, éloignée du deuxième élément (20) de déformation, du deuxième moyen de transmission de force, et dans lequel tant des forces de pression, qu'également de compression, peuvent par le premier et le deuxième moyens (14, 24) de transmission de force être transmises du premier élément (10) de déformation au deuxième élément (20) de déformation, le premier moyen (14) de transmission de force étant disposé au centre du premier élément (10) de déformation, et le deuxième moyen (24) de transmission de force étant disposé au centre du deuxième élément (20) de déformation, et le moyen (14, 24) respectif de transmission de force étant constitué d'une pièce avec la membrane (12, 22) respective, **caractérisé en ce que** les deux moyens (14, 24) de transmission de force sont reliés entre eux aux extrémités par soudure par résistance.

9. Procédé suivant la revendication 8, **caractérisé en ce que** lors de la liaison des deux moyens (14, 24) de transmission de force, les bords (16, 24) des deux éléments (10, 20) de déformation sont isolés électriquement l'un de l'autre, notamment on dépose, avant la liaison, une couche isolante du point de vue électrique sur les surfaces tournées l'une vers l'autre des bords (16, 26) des deux éléments (10, 20) de déformation.

10. Procédé suivant l'une des revendications 8 ou 9, **caractérisé en ce que**, à la suite de la liaison des deux moyens (14, 24) de transmission de force, on relie fixement entre eux, notamment en les soudant, le bord (16) du premier élément (10) de déformation et le bord (26) du deuxième élément (20) de déformation.
